# EUROPÄISCHE PATENTSCHRIFT

(11) **EP 1 458 652 B1**
(45) Veröffentlichungstag und Bekanntmachung des Hinweises auf die Patenterteilung: **28.11.2012**
(21) Anmeldenummer: 02732347.6
(22) Anmeldetag: 25.03.2002
(51) Int. Cl.: C03C 17/00, C03C 17/32, C03C 17/34, C03C 17/22, C04B 20/12, C04B 26/26, C04B 28/02

(54) **OBERFLÄCHENBESCHICHTETES GLASGRANULAT**
SURFACE-COATED GLASS GRANULATE
GRANULAT DE VERRE A SURFACE ENROBEE

(30) Priorität: 27.03.2001 DE 10115159
(43) Veröffentlichungstag der Anmeldung: 22.09.2004
(73) Patentinhaber: Fabrino Produktionsgesellschaft mbH & Co. KG, 88319 Altrach (DE)
(72) Erfinder: Marohn, Heinz, 47803 Krefeld (DE)
(74) Vertreter: Bauer, Wulf
(86) Internationale Anmeldenummer: PCT/DE2002/001069
(87) Internationale Veröffentlichungsnummer: WO 2002/076900

(56) Entgegenhaltungen:
- EP-A- 0 450 638
- WO-A-99/01394
- GB-A- 722 414
- US-A- 4 157 907
- PATENT ABSTRACTS OF JAPAN vol. 013, no. 021 (C-560), 18. Januar 1989 (1989-01-18) & JP 63 225554 A (NIPPON GLASS FIBER CO LTD), 20. September 1988 (1988-09-20)

## Beschreibung

Die Erfindung betrifft die Verwendung eines Glasgranulats, das oberflächlich mit einer Schutzschicht beschichtet ist

Es ist bekannt, Glasgranulat aus Spezialgläsern oder Silicatgläser nach Verspiegelung als Effektelemente Zuschlagstoffen beizumischen, die überwiegend anorganisch gebunden werden. Gängige Praxis ist ferner Glasgranulate unterschiedlicher Herkunft mit Reaktionsharzen zu binden und davon u.a. Platten und Tafeln für Beläge und Verkleidungen herzustellen.

Patent Abstracts of Japan Bd. 013, Nr. 021 (C-560), 18. Januar 1989 & JP 63 225554 A beschreibt die Beschichtung von Glasgranulaten, welche eine relativ kleine Korngröße halben, mit einem Silan und einem Thermoplasten, für den Thermoplasten wird als Beispiel PVAC, Polyakrylat und PE genannt. Aus EP 0 450 638 A sind abgeschnittene Glasfasern bekannt, die mit einem Silan und einem Polymer beschichtet sind. Eingesetzt werden sollen diese sehr kleinen Fasern in glasfaserhaltigen Papieren. GB 722 414 A beschreibt die Beschichtung eines Materials mit einem Silan und dann mit einem Harz, das Harz ist beispielsweise ein Alkydharz, ein Melamin-Aldehydharz oder ein Phenol-Aldehydharz. Das zu beschichtende Material kann auch ein Glaskörper sein. WO 99/01394 A bezieht sich auf Verfahren und Vorrichtungen zur Herstellung von Glasfolien und daraus hergestellten Verbundkörpern. Es sollen sehr dünne Glasfolien auf industrieller Basis in großen Mengen hergestellt werden, es werden Glaskörper mit einem Silatfluß beschichtet. Aus der FR 2 791 692 ist die Verwendung eines Glasgranulats in gegossenem Asphalt bekannt.

Nachteilig bei der Verwendung von Glasgranulat insbesondere aus Silicatglas als Zuschlagstoff und Effektelement ist dessen geringe Bruchfestigkeit nach der Vermahlung und die geringe Alkalienbeständigkeit, welche bei anorganisch gebundenen Werkstoffen zu Auflösungs- bzw. Treiberscheinungen führt.

Die geringe Bruchfestigkeit von Glasgranulat aus üblichen Alkalisilikatglas ist bedingt durch feinste Mikrorisse, die bei der Herstellung entstehen. Diese Mikrorisse stellen Sollbruchstellen im Mikrometerbereich dar und führen bei mechanischer Belastung schnell zu einem Auseinanderbrechen ("Zerbröseln") der einzelnen Glaspartikel. Diese vorhandene Instabilität des Glasgranulates kann sich noch verstärken, wenn Wasser in die Mikrorisse einkondensiert und damit eine Riss-Fortpflanzung in die einzelnen Glaskörner möglich wird. Durch die Rissbildung kommt es ferner zur Bildung von scharfen Kanten, was zu Verletzungen führen kann.

Wegen der mechanischen Instabilität und mangelnden Bruchfestigkeit von Glasgranulat scheidet dessen Einsatz als Bau- und Werkstoff in Bereichen aus, in denen erhöhte Anforderungen an Sicherheit und mechanische Belastbarkeit gestellt werden. Dies ist insbesondere bei Bodenbelägen der Fall.

Nachteilig an Glasgranulat aus üblichem Alkalisilikatglas ist ferner dessen geringe Beständigkeit gegenüber Laugen, die das Siliziumdioxid des Glases herauslösen. Hierdurch wird die Einsatzmöglichkeit von Glasgranulat als Zuschlagsstoff in hydraulisch gebundenen Materialien stark eingeschränkt. Durch das an den Grenzflächen zwischen Glas und Beton bestehende basische Milieu im Beton wird die Glaskorn-Oberfläche angegriffen und aufgelöst. Es kommt zu nachteiligen Riss- und Spannungsbildungen im Beton, sogar zum Herauslösen einzelner an der Oberfläche eines betonhaltigen Belages, insbesondere eines Bodenbelages liegender Glaspartikel.

Aus der DE 41 20 764 A1 ist ein betonhaltiger Belag bekannt, der aus einer Mischung von Zement, Zuschlagstoffen und granulierten Effektelementen aus Glas, das durch Hochvakuummetallisierung verspiegelt wurde, besteht.

Bekannt sind ferner Bodenbeläge auf Kunstharz-Basis, die Glasgranulat aus speziell gehärteten "Morano"-Glas enthalten. Mit einer Mohschen Härte von etwa 7,0 weist dieses Glas eine ausreichende Bruchfestigkeit auf und ist damit für den Einsatz in Bodenbelägen geeignet. Nachteilig sind jedoch die mit der Herstellung dieses speziellen Glases verbundenen Kosten. Schließlich ist es bekannt, Fenster- oder Autoglasscheiben zur Verbesserung der Haftfähigkeit an Kunststoffen oder Metallen mit einer Beschichtung aus Silanen zu versehen. Dieser Vorgang wird allgemein als Silanisieren bezeichnet.

Der Erfindung liegt die Aufgabe zugrunde, die Verwendung eines Glasgranulats aufzuzeigen, das eine hohe Bruchfestigkeit, eine gute mechanische Belastbarkeit und eine hohe Laugenbeständigkeit aufweist und als splitterfester Zuschlagstoff in Bodenbelägen aus Beton oder aus einem anderen mineralisch/anorganisch gebundenen Material einsetzbar sein soll. Das Granulat soll schließlich kostengünstig in der Herstellung und ansprechend im Design sein.

Diese Aufgabe wird durch die Merkmale des Anspruchs 1 gelöst.

Durch die oberflächliche Beschichtung des erfindungsgemäßen Glasgranulates mit einer organischen Siliciumverbindung und einem Duroplasten oder einem anorganischen Polymeren werden die Bruchfestigkeit des Granulates erheblich erhöht etwaige vorhandene Mikrorisse wirksam verschlossen und so ein Auseinanderbrechen der einzelnen Glaskörner verhindert. Die spezielle Schutzschicht bewirkt, dass das Glasgranulat einheitlich eine Mohsche-Härte von etwa 6 und damit eine hohe mechanische Belastbarkeit und geringe Splitterbildung aufweist. Darüber hinaus weist das Glasgranulat eine erheblich verbesserte Alkalibeständigkeit gegenüber üblichem Alkalisilikatglas auf. So wurde selbst nach mehrmonatigem Einschluss des Granulates in Beton keine alkalibedingte Veränderung der Oberfläche des erfindungsgemäßen Glasgranulates beobachtet.

Durch die Schutzschicht werden die unterschiedlichen mechanischen Gebrauchswerte von Gläsern unterschiedlicher Herkunft und Zusammensetzungen ausgeglichen und somit für deren Weiterverarbeitung- und -bearbeitung einheitliche Voraussetzungen geschaffen.

Die Schutzschicht kann ein- oder mehrschichtig ausgebildet sein. Dies bedeutet, dass organische Siliciumverbindung und Duroplast gemeinsam in einer Schicht oder in getrennten Schichten vorliegen. Besteht die Schutzschicht aus einer anorganischen Polymermatrix ist sie in der Regel einschichtig, d.h. ihre Ausbildung erfolgt ohne eine organische Siliciumverbindung.

Als organische Siliciumverbindung wird vorzugsweise eine Verbindung der allgemeinen Formel

Y-(CH₂)ₙ SiX₃

eingesetzt, worin X ein Halogenatom wie Fluor, Chlor, Brom und Iod oder eine Alkoxygruppe mit 1 bis 20 Kohlenstoff-atomen, Y eine Amino-, Carboxy- , Cyano-, Methacryloxy-, Epoxy-, Mercapto- oder eine gegebenenfalls alkyl-, aryl- oder aralkyl-substituierte Vinylgruppe und n eine Zahl von 0 bis 30, insbesondere von 0 bis 10, ist.

Derartige organofunktionelle Silane sind als Haftvermittler bekannt. In der vorliegenden Erfindung erfüllen sie einerseits die Funktion eines Haftvermittlers und gewährleisten eine dauerhafte Verbindung zwischen Glas und Duroplasten. Andererseits dienen sie in Verbindung mit Duroplasten als alkaliresistente, porenschließende Substanz, mit der selbst feinste Mikrorisse im Glas dauerhaft verschlossen werden.

Die Herstellung und Eigenschaften von erfindungsgemäß einsetzbaren organischen Siliciumverbindungen sind beispielsweise beschrieben "Ullmanns Enzyklopädie der technischen Chemie" (4. Auflage), Bd. 21, S. 498-499.

Erfindungsgemäß geeignete Duroplaste sind alle aus härtbaren Harzen hergestellten Kunststoffe wie Epoxid-Harze, ungesättigte Polyesterharze, Diallylphthalat-Harze, Harnstoff-Formaldehyd-Harze, Melamin-Formaldehyd-Harze, Melamin-Phenol-Formaldehyd-Harze, Polyurethane, Pre-Polymere und Phenol-Formaldehyd-Harze. Vorzugsweise werden Epoxid-Harze, insbesondere solche auf Basis von Bisphenol-A bzw. Bisphenol A/F-Harze, und Polyurethane, eingesetzt.

Erfindungsgemäß geeignete anorganische Polymere sind alle aus härtbaren anorganischen Bindemitteln hergestellten Strukturen, wie Wassergläser, Monoaluminiumphosphat (Feuerfestbinder) oder keramische Rohstoffe. Vorzugsweise werden Wassergläser und Monoaluminiumphosphat eingesetzt.

Vorzugsweise erfüllen die in der erfindungsgemäßen Beschichtung eingesetzten Duroplaste die Norm gemäß DIN 7724 (Beiblatt 2/1972).

Entsprechender Hinweis für anorganische polymere Strukturen bzw.Verbünde.

Die Duroplaste können in beliebiger Form, beispielsweise als Preßmassen, Gießharze, Leimharze oder Lackharze eingesetzt werden. Vorzugsweise werden die Duroplaste in Form von Lacken eingesetzt.

Die Herstellung und Eigenschaften der Duroplaste sind allgemein bekannt und beispielsweise beschrieben in Bauer, Woebcken "Verarbeitung duroplastischer Formmassen", München, Hanser Verlag, 1973; "Physik der Duroplaste und anderer Polymerer", Darmstadt, Steinkopf, 1978; Saechtling "Kunststoff-Taschenbuch", 23. Ausg.: S. 2-5, S. 378-443, München, Hanser-Verlag 1986; "Ullmanns Enzyklopädie der technischen Chemie" (4. Auflage) 15, 309-335, 477-481 und Woebcken "Duroplaste, Kunststoff-Handbuch", 2. Aufl., Bd. 10, München-Wien: Hanser-Verlag, 1988.

Entsprechender Hinweis für Wasserglas und Monoaluminiumphosphat

Das Auftragen der oberflächlichen Verkappselung kann beispielsweise durch Auftragen einer organischen oder wässrigen Lösung der organischen Siliciumverbindung auf die Glasoberfläche und anschließende Überbeschichtung mit einem Lack aus duroplastischem Harz erfolgen

Abgestimmt auf den späteren Einsatzzweck des Granulats, kann auf die Mitverwendung der Silan-Komponente verzichtet werden. Insbesondere gilt dies dann, wenn die Schutzschicht aus einem anorganischen Bindemittel aufgebaut wird.

Das Verfahren kann sowohl mit kalten Glas als auch mit temperierten Glasgranulat durchgeführt werden.

Im folgenden wird die Beschichtung des Glasgranulats mit dem
I) Silan/ Duroplast-System
II) anorganischem Bindemittel
beispielhaft beschrieben:

### I) Beschichtung mit einem Silan/Duroplast-System

### Schritt 1: Vorbehandlung des Glasgranulats mit Silan

Mögliche Einsatzformen des Silans:
a) in Reinform
b) im wäßrigem Medium
c) in einem Lösungsmittel
zu b): Das Silan wird vorzugsweise in Wasser oder einem Gemisch aus Wasser und einem Lösungsmittel (z.B. Alkohol) unter säuren- oder basenkatalytischer Hydrolyse gelöst.

Wirkkonzentration des Silans:
0-10 Gew.-%, vorzugsweise: 0,1 - 5,0 Gew.-%
zu c): Das Silan wird z.B. in Alkoholen, Ketonen,
Estern, oder Kohlenwasserstoffen gelöst.

Wirkkonzentration des Silans:
0-20 Gew.%, vorzugsweise : 1 - 5 gew.-%

Silanauftrag: Der Auftrag des Silans (in Variation a bis c) auf das Glasgranulats kann durch Sprühen, Gießen, Träufeln, unter intensiver Vermischung (Verkollerung) mit einem Zwangsmischer erfolgen.

Nach ausreichender Mischdauer/Verkollerung schließt sich ein Trocknungsvorgang an, der dann abgeschlossen ist, wenn das Glasgranulat klebfrei ist und nicht mit Testchemikalien reagiert.

### Schritt 2: Beschichtung des Silan-vorbehandelten Glasgranulats

Für die Beschichtung des Silan-vorbehandelten Glasgranulates eignen sich vorzugsweise folgende Duroplast-Systeme:
a) 2-Komponenten-Epoxid: Härtung durch Mischung von Epoxid-Harz (Komponente A) und Amin-Härter (Komponente B)

Vorgehensweise: Komponenten A und B werden bei Raumtemperatur extern vorgemischt und dem Glasgranulat unter starker Vermischung zugesetzt. Der Beschichtungs-Vorgang ist abgeschlossen, wenn das Glasgranulat klebefrei ist.

### 2-Kompoenten und/oder 1-Kompoenten Urethan:

Härtung durch Mischung von Polyol und Diisocyanat oder Beschichtung durch prepolymeres Isocyanat.

### Vorgehensweise: wie bei a)

c) Acrylate: Härtung durch Mischung von Acrylat-Harz (Komponente und radikalischen Härter (Komponente B) oder Härtung durch UV-Strahlung (ohne radikalischen Härter)

### Vorgehensweise:

Bei Acylat/Radikal-Härter wie bei a).
Bei UV-Härtung: Das Acrylat wird unter intensivem Rühren dem Glasgranulat zugesetzt (bei RT). Nach homogener Acrylat-Verteilung wird das Glasgranulat unter intensivem Mischen mit UV-Licht bestrahlt. Der Vorgang ist bei Klebefreiheit des Glasgranulats abgeschlossen.
d) Polyester Härtung durch Mischung von PolyesterHarz und radikalischen Härter oder durch UV-Strahlung.

### Vorgehensweise: wie bei c)

Erzielbare Schichdicken d: Abhängig von der Korngröße des Glasgranulats und der Zugabemenge des Duroplast-Sytems:
d = bis 200 µm

Ebenso kann zunächst ein Gemisch aus organischer Siliciumverbindung und duroplastischem Harz in einem geeigneten Lösungsmittel hergestellt und dieses Gemisch anschließend auf die Glasoberfläche aufgetragen werden.

Die Zugabe-Menge an Silan zum Duroplast-Sytem beträgt vorzugsweise 1 - 10 Gew.-%.

Die Vorgehensweise bei der Beschichtung erfolgt wie voran beschrieben (Schritt 2 a-d).

Vorzugsweise werden organische Siliciumverbindung und Duroplast aufeinander abgestimmt. Besonders bevorzugte Kombinationen von organischer Siliciumverbindung (A) der allgemeinen Formel Y-(CH₂)ₙ SiX₃, in der Y, n und X die zuvor angegebene Bedeutung haben, und Duroplast (B) sind nachfolgend aufgeführt:
- Siliciumverbindung A mit Y = Amino- oder Epoxy-, Mercapto-Gruppe in Verbindung mit einer Epoxidharzmatrix als Duroplast (B)
- Silciumverbindung A mit Y = Acrylat-, Methacrylat-, Vinyl-Gruppe in Verbindung mit einer Polyestermatrix, Acrylatmatrix und/oder Vinylestermatrix als Duroplast (B).
- Silciumverbindung A mit Y = Amino-, Epoxy-, Mercapto-Gruppe in Verbindung mit einer Urethan- bzw. Isocyanatmatrix als Duroplast (B).

Hierdurch wird eine besonders dauerhafte, irreversible Haftung zwischen der Glasoberfläche und Schutzschicht erzielt.

### II) Beschichtung und Färbung mit Alkaliwasserglas als anorganischem Bindemittel

Für die Beschichtung des Glasgranulats eignen sich vorzugsweise Natrium - und/oder Kaliwassergläser.

### Vorgehensweise:

Bei Raumtemperatur wird das Glasgranulat mit dem Wasserglas intensiv durch einen Zwangsmischer vermischt (verkollert). Die Zugabe des Wasserglases kann durch Sprühen, Gießen oder Träufeln erfolgen. Nach homogener Benetzung wird zur Färbung des eingesetzten Glasgranulats ein anorganisches Pulver-Pigment zugegeben und homogen auf der Oberfläche des Granulats verteilt. Alternativ kann zur Färbung auch das Wasserglas direkt mit dem Pigmentpulver versetzt und anschließend dem Glasgranulat zugegeben werden. Zur Fixierung und Ausbildung der gefärbten anorganischen Polymermatrix wird das Wasserglas bei Temperaturen zwischen 300 und 1000 °C (vorzugsweise bei 650 bis 950 °C) eingebrannt. Hierzu eignen sich direkt beheizte Drehrohröfen.

Hierdurch wird eine irreversibl aufgebrachte Schutzschicht erhalten, die sich insbesondere auch durch ihre Farbkonstanz bei hohen Temperaturen (300 bis 500 °C)auszeichnet.

Gemäß einer bevorzugten Ausführungsform der Erfindung wird die Außenfläche der Beschichtung zur Verbesserung der Anhaftung nachfolgender Bindemittel oder Gemenge griffig gestaltet.

Als Glasgranulat können Granulate aus beliebigen Gläsern wie Kalk-Natron-Silikat-Glas, Borosilicatglas, Quarzglas, technisches Glas, Fensterglas, Flaschenglas, Opalglas, Wirtschaftsglas, Farbglas, Kristallglas, Faserglas, Schaumglas, Verbundglas, Kron- oder Flintglas jeweils in jeder beliebigen Farbe oder Mischungen hieraus eingesetzt werden.

Unter Gläsern im Sinne dieser Erfindung sind ganz allgemein anorganische Stoffe im amorphen, nichtkristallinen Festzustand zu verstehen.
Auf die Reinheit und die Zusammensetzung der erfindungsgemäß eingesetzten Glasgranulats kommt es nicht an; ein wesentlicher Aspekt der Erfindung ist vielmehr, dass durch die erfindungsgemäß vorgesehene Silanisierung und Beschichtung mit einem Duroplasten bzw. einer anorganischen Polymermatrix Glasgranulat gleich welcher Art auf eine einheitlich hohe Bruchfestigkeit und Alkalibeständigkeit gebracht werden kann. Es kann daher auch kostengünstig erhältliches Recyclingglas eingesetzt werden.

Vorzugsweise wird Klarglas eingesetzt.

Das Glasgranulat weist vorzugsweise einen mittleren Durchmesser von 0,5 bis 64 mm, insbesondere von 1 bis 32 mm, auf.

Die Herstellung, Zusammensetzungen und Eigenschaften der einzelnen Glassorten sind allgemein bekannt und beispielsweise beschrieben in "Kirk-Othmer" (3. Auflage) Bd. 11, S. 807-880; "Ullmanns Enzyklopädie der technischen Chemie" (4. Auflage) Bd. 12, S. 317-366.

Wenn das Glasgranulat gemäß der bevorzugten Ausführungsform aus Klarglas besteht, können besondere optische Effekte mit einer eingefärbten Schutzschicht erzielt werden. Die Einfärbung der Schutzschicht kann durch Zusatz eines geeigneten Farbstoffs zu der organischen Siliciumverbindung, dem Duroplasten oder dem anorganischen Bindemittel erfolgen. Zur Einfärbung geeignete Farbstoffe sind Pigmentpulver und Pasten organischen und anorganischen Ursprungs.

Durch die zuvor beschriebene Einfärbung entsteht der optische Effekt von "durchgefärbten" transparentem Glas. Dieser Eindruck bleibt selbst dann bestehen, wenn die eingefärbte Schutzschicht bereichsweise von der Oberfläche des Glasgranulates abgetragen wird. In diesem Fall scheint die Farbe von den noch vorhandenen, mit eingefärbter Schutzschicht beschichteten Bereichen durch und erweckt so den Eindruck, dass der gesamte Glaspartikel durchgefärbt ist. Dies bedeutet, dass das mit entsprechend eingefärbten Schutzschicht versehene erfindungsgemäße Glasgranulat selbst nach bereichsweisen Abschleifen oder Abstrahlen den Eindruck von gleichmäßig durchgefärbten Glas hervorrufen. Gegenüber durchgefärbtem Glasgranulat besitzt das mit eingefärbter Schutzschicht beschichtete Glasgranulat den Vorteil, dass es erheblich kostengünstiger ist.

Wegen seiner hohen Bruchfestigkeit und ausgezeichneten Alkalibständigkeit eignet sich das erfindungsgemäße Glasgranulat insbesondere zur Verwendung als Zuschlagstoff in Baustoffkörpern oder -belägen.

Insbesondere ist das erfindungsgemäße Glasgranulat geeignet zum Einsatz in mineralisch/anorganischen gebundenen Baustoffkörpern oder -belägen.

Darüber hinaus ist speziell das mit einem anorganischen Bindemittel gefärbte Glasgranulat, aufgrund seiner zusätzlichen hohen Temperaturstabilität (Farbkonstanz bei hohen Temperaturen, vorzugsweise 300 bis 500°C) für den Einsatz in Asphaltbelägen geeignet.

Aufgrund der hohen Bruchfestigkeit des erfindungsgemäßen Glasgranulates und der geringen Splitterbildung ist schließlich auch eine Verwendung als Gleitmaterial für Sport- und Eventveranstaltungen denkbar. In Verbindung mit entsprechenden Gleitsubstanzen könnte das erfindungsgemäße Glasgranulat beispielsweise als "künstlicher Schnee" bei Ski- und Snowboardveranstaltungen eingesetzt werden.

Nachfolgend wird die Erfindung anhand eines Ausführungsbeispieles näher beschrieben:
15 kg Glasgranulat aus Alkalisilikatglas mit einer mittleren Partikelgröße von 0-4 mm, wurden in einen Trommelmischer gegeben und bei Raumtemperatur, unter intensivem Mischen, mit einem Gemisch aus 0,45 kg Duroplast (Epoxidharz + Härter) sowie 0,045 kg eines Epoxidkorrespondierenden Silans, versetz. Nach homogener Benetzung des eingesetzten Glasgranulats wurden bei Raumtemperatur, unter intensivem Mischen, 0,1 kg eines anorganischen Farbpigmentpulvers zugegeben. Nach, homogenen Verteilung des Farbpigments, wurde solange bei Raumtemperatur gerührt, bis Klebfreiheit des Glasgranulates eingetreten war.

Unter dem Begriff Glasgranulat werden Partikel, Stücke bzw. Teilchen aus Glas beliebiger Herkunft und Produktion verstanden, insbesondere auch Glaskugeln, Abschnitte von Rovings, Glasfasern, Glastropfen, Bruchstücke aus größeren Glaskörpern usw..

## Patentansprüche

1. Verwendung eines Glasgranulats, das oberflächlich mit einer Schutzschicht beschichtet ist, welche entweder mindestens eine organische Siliciumverbindung und mindestens einen Duroplasten oder mindestens eine anorganische Polymermatrix enthält, als splitterfester Zuschlagstoff in mineralisch/anorganisch gebundenen Baustoffkörpern und -belägen, insbesondere in Beton.

2. Verwendung eines Glasgranulats nach Anspruch 1, **dadurch gekennzeichnet, dass** die organische Siliciumverbindung eine Verbindung der allgemeinen Formel
Y-(CH₂)ₙ SiX₃
ist, worin X ein Halogenatom wie Fluor, Chlor, Brom und Iod oder eine Alkoxygruppe mit 1 bis 20 Kohlenstoff-atomen, Y eine Amino-, Carboxy-, Cyano-, Methacryloxy-, Epoxy-, Mercapto- oder eine gegebenenfalls alkyl-, aryl- oder aralkyl-substituierte Vinylgruppe und n eine Zahl von 0 bis 30, insbesondere von 0 bis 10, ist.

3. Verwendung eines Glasgranulats nach Anspruch 1 oder 2, **dadurch gekennzeichnet, dass** der Duroplast ein Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz oder ein ungesättigter Polyesterharz ist.

4. Verwendung eines Glasgranulats nach Anspruch 3, **dadurch gekennzeichnet, dass** der Epoxid-Harz ein Epoxidharzlack auf Basis von Bisphenol-A/Bisphenol-A/F ist.

5. Verwendung eines Glasgranulats nach Anspruch 1, **dadurch gekennzeichnet, dass** die anorganische Polymermatrix aus Wasserglas, Monoalunaiumphosphat oder keramischen Rohstoffen besteht.

6. Verwendung eines Glasgranulats nach einem der vorangegangen Ansprüche **dadurch gekennzeichnet, dass** das Glas im Wesentlichen aus Klarglas besteht und die Schutzschicht eingefärbt ist.

7. Verwendung eines Glasgranulats nach einem der vorangegangen Ansprüche **dadurch gekennzeichnet, dass** das eingefärbte Glas bei Temperaturen über 300 °C Farbkonstanz aufweist.

8. Verwendung eines Glasgranulats nach einem der vorangegangenen Ansprüche, wobei das Glasgranulat Glaspartikel aufweist, **dadurch gekennzeichnet, dass** die Glaspartikel Recyclingglas enthalten.

9. Verwendung eines Glasgranulats nach einem der vorangegangenen Ansprüche, wobei das Glasgranulat Glaspartikel aufweist, **dadurch gekennzeichnet, dass** die Glaspartikel einen mittleren Durchmesser von 0,5 bis 64 mm, insbesondere von 1 bis 32 mm, aufweisen.

10. Verwendung des Glasgranulats nach einem der Ansprüche 1 bis 7 als Gleitmedium für Sport- und Eventvez-anstaltungen.

11. Verwendung eines Glasgranulats nach Anspruch 1, **dadurch gekennzeichnet, dass** der Baustoffbelag ein Bodenbelag ist.

## Claims

1. Use of a glass granulate surface-coated with a protective layer comprising either at least one organic silicon compound and at least one thermosetting plastic, or at least one inorganic polymer matrix, as a shatterproof aggregate In minerally/inorganically bound construction-material bodies or coverings, particularly In concrete.

2. Use of a glass granulate according to claim 1, **characterised in that** the organic silicon compound is a compound with the general formula
Y-(CH₂)ₙ SIX₃,
wherein X is a halogen atom such as fluorine, chlorine, bromine and iodine or an alkoxy group with 1 to 20 carbon atoms, Y Is an amino, carboxy, cyano, methacryloxy, epoxy, mercapto or an optionally alkyl, aryl, or aralkyl-substituted vinyl group and n is a number from 0 to 30, in particular from 0 to 10.

3. Use of a glass granulate according to claim 1 or 2, **characterised in that** the thermosetting plastic is a diallylphthalate resin, epoxy resin, ureaformaldehyde resin, melamine-formaldehyde resin, melamine-phenol-formaldehyde resin, phenol-formaldehyde resin or an unsaturated polyester resin.

4. Use of a glass granulate according to claim 3, **characterised In that** the epoxy resin is an epoxy resin lacquer based on bisphenol A/ bisphenol A/F.

5. Use of a glass granulate according to claim 1, **characterised in that** the inorganic polymer matrix consists of water glass, monoaluminium phosphate or ceramic raw materials.

6. Use of a glass granulate according to any one of the preceding claims, **characterised in that** the glass substantially consists of clear glass and the protective layer is coloured.

7. Use of a glass granulate according to any one of the preceding claims, **characterised in that** the coloured glass is colour-consistent at temperatures above 300°C.

8. Use of a glass granulate according to any one of the preceding claims, wherein the glass granulate comprises glass particles, **characterised in that** the glass particles contain recycled glass.

9. Use of a glass granulate according to any one of the preceding claims, wherein the glass granulate comprises glass particles, **characterised In that** the glass particles have an average diameter of 0.5 to 64 mm, In particular of 1 to 32 mm.

10. Use of the glass granulate according to any one of the claims 1 to 7 as an anti-friction medium for sporting and other events.

11. Use of a glass granulate according to claim 1, **characterised in that** the construction-material covering is a floor covering.

## Revendications

1. Utilisation d'un granulé de verre dont la surface est revêtue d'une couche protectrice qui comprend soit au moins un composé organique de silicium et au moins une matière plastique thermodurcissable soit au moins une matrice polymère inorganique, en tant que produit adjuvant résistant aux éclats dans des corps et revêtements de matériau de construction liés de façon minérale/inorganique, en particulier dans le béton.

2. Utilisation d'un granulé de verre selon la revendication 1, **caractérisée par le fait que** le composé organique de silicium est un composé de la formule générale
Y-(CH₂)ₙ SiX₃
où X est un atome d'halogène tel que le fluor, le chlore, le brome et l'iode, ou un groupe alkoxy ayant 1 à 20 atome(s) de carbone, Y est un groupe amino, carboxy, cyano, méthacryloxy, époxy, mercapto ou un groupe vinyle substitué, le cas échéant, par alkyle, aryle ou aralkyle, et n est un nombre compris entre 0 et 30, en particulier entre 0 et 10.

3. Utilisation d'un granulé de verre selon la revendication 1 ou 2, **caractérisée par le fait que** ladite matière plastique thermodurcissable est une résine de diallylphthalate, une résine époxyde, une résine d'urée-formaldéhyde, une résine de mélamine-formaldéhyde, une résine de mélamine-phénol-formaldéhyde, une résine de phénol-formaldéhyde ou une résine insaturée de polyester.

4. Utilisation d'un granulé de verre selon la revendication 3, **caractérisée par le fait que** la résine époxyde est un vernis de résine époxyde à base de bisphénol A / bisphénol A/F.

5. Utilisation d'un granulé de verre selon la revendication 1, **caractérisée par le fait que** ladite matrice polymère Inorganique se compose de verre soluble, de phosphate de mono-aluminium ou de matières brutes céramiques.

6. Utilisation d'un granulé de verre selon l'une quelconque des revendications précédentes, **caractérisée par le fait que** le verre se compose pour l'essentiel de verre clair et que ladite couche protectrice est colorée.

7. Utilisation d'un granulé de verre selon l'une quelconque des revendications précédentes, **caractérisée par le fait que** le verre coloré présente une stabilité de couleur à des températures supérieures à 300 °C.

8. Utilisation d'un granulé de verre selon l'une quelconque des revendications précédentes, le granulé de verre comprenant des particules de verre, **caractérisée par le fait que** lesdites particules de verre comprennent du verre recyclé.

9. Utilisation d'un granulé de verre selon l'une quelconque des revendications précédentes, le granulé de verre comprenant des particules de verre, **caractérisée par le fait que** lesdites particules de verre présentent un diamètre moyen qui est compris entre 0,5 et 64 mm, en particulier entre 1 et 32 mm.

10. Utilisation du granulé de verre selon l'une quelconque des revendications 1 à 7, en tant que milieu de glissement pour des manifestations sportives et événements.

11. Utilisation d'un granulé de verre selon la revendication 1, **caractérisée par le fait que** le revêtement de matériau de construction est un revêtement de sol.
